# EUROPÄISCHE PATENTSCHRIFT

(11) **EP 0 760 430 B1**
(45) Veröffentlichungstag und Bekanntmachung des Hinweises auf die Patenterteilung: **23.02.2000**
(21) Anmeldenummer: 96113221.4
(22) Anmeldetag: 17.08.1996
(51) Int. Cl.: F16B 21/02, G01P 1/00

(54) **Verbindungsanordnung für zwei zueinander verdrehbare Bauteile**
Fastening device for two parts which are rotatable relative to one another
Dispositif de fixation pour deux pièces pouvant tourner l'une par rapport à l'autre

(30) Priorität: 25.08.1995 DE 19531262
(43) Veröffentlichungstag der Anmeldung: 05.03.1997
(73) Patentinhaber: Ford Global Technologies, Inc., Dearborn, Michigan 48126-2490 (US)
(72) Erfinder: Bertram, Ulrich, 50129 Bergheim (DE); Wickler, Wolfgang, 50321 Brühl (DE)
(74) Vertreter: Messulam, Alec Moses

(56) Entgegenhaltungen:
- EP-A- 0 183 333
- EP-A- 0 335 673
- FR-A- 2 606 469

## Beschreibung

Die Erfindung bezieht sich auf eine Verbindungsanordnung bestehend aus zwei zueinander verdrehbaren Bauteilen, der im Oberbegriff des Patentanspruches 1 erläuterten Art.

Aus der DE-OS 20 54 855 ist eine Verbindungsanordnung für zwei zueinander verdrehbare Bauteile, der im Oberbegriff des Patentanspruches 1 erläuterten Art bekannt.

Bei der bekannten Verbindungsanordnung handelt es sich um eine Schwenkverbindung, die leicht und ohne Werkzeug montiert und demontiert werden kann und die in Funktion eine begrenzte Drehbewegung ausführen kann.

Die bekannte Verbindungsanordnung ist daher nicht dazu ausgelegt, einen Bauteil in einer bestimmten Position unverrückbar festzulegen.

Aus der DE-OS 37 10 838 ist eine Verbindungsanordnung für zwei zueinander verdrehbare Bauteile bekannt, wie sie im allgemeinen auch als sogenannter Bajonettverschluß bezeichnet wird.

Dieser bekannte Bajonettverschluß ist in Form eines Halteclips ausgebildet, der in einer rechteckigen Öffnung angeordnet wird und nach Drehung um 90 Grad mittels radial abstehender Rastlappen festlegbar ist.

Der bekannte Bajonettverschluß weist sich radial und axial erstreckende Rastlappen auf, mit denen man ein Bauteil an einem anderen Bauteil befestigen kann und durch die Form der Rastlappen ist weitgehendst ein selbsttätiges Lösen verhindert.

Die Aufgabe der Erfindung ist es, eine Verbindungsanordnung für zwei zueinander verdrehbare Bauteile, der im Oberbegriff des Patentanspruches 1 erläuterten Art derart umzugestalten, daß das eine Bauteil am anderen Bauteil in einer bestimmten definierten Lage festlegbar ist.

Gemäß der Erfindung wird diese Aufgabe gelöst, indem eine Verbindungsanordnung bestehend aus zwei zueinander verdrehbaren Bauteilen der im Oberbegriff des Patentanspruches 1 erläuterten Art, die im Kennzeichenteil des Patentanspruches 1 aufgezeigten Merkmale aufweist.

Dadurch, daß die der zylindrischen Aufnahme benachbarte, rechteckige Aufnahme eine parallel zur Außenfläche verlaufende Schwalbenschwanzführung ist, die dem zylindrischen Zapfen benachbarte Platte eine am Zapfen angeordnete Federplatte ist, deren Breite kleiner ist als die Eintrittsbreite und deren Länge kleiner als die Basisbreite der Schwalbenschwanzführung ist und wobei jeweils eine Breite in die benachbarte Länge mit einer Abrundung übergeht, deren Radius kleiner als die halbe Breite ist, wird eine Verbindungsanordnung geschaffen, bei der ein Bauteil gegenüber einem anderen Bauteil in einer definierten Lage festlegbar ist, derart, daß ein selbsttätiges Lösen infolge von Vibrationen und dergleichen nicht zu befürchten ist.

In den Ansprüchen 1 bis 6 sind weitere zweckmäßige Ausgestaltungen der Erfindung erläutert.

Dadurch, daß am zylindrischen Zapfen ein Sicherungsarm angeordnet ist, der während der Einsetz- und Drehbewegung nach axial oberhalb der Schwalbenschwanzführung ausweichen kann und nach Verdrehung um 90 Grad axial in den Bereich der Schwalbenschwanzführung einrastet, wird eine zusätzliche Sicherung gegen ein unbeabsichtigtes Lösen der Verbindungsanordnung bereitgestellt.

In bevorzugter Weise ist hierbei ein Bauteil der Verbindungsanordnung als ein Sensorbauteil angeordnet, das in einem anderen Bauteil, einem Motor- oder Getriebegehäuse in einer bestimmten Position festgelegt und verriegelt werden muß.

In weiterer Ausgestaltung der Erfindung ist das Sensorbauteil mit seiner Verbindungsleitung ein Teil des Kabelstranges und wird erst bei der Montage des Getriebes im Kraftfahrzeug an der vorgesehenen Stelle eingesetzt.

Die Erfindung wird anhand eines in den beiliegenden Zeichnungen gezeigten Beispieles näher erläutert. Es zeigt:
- Fig. 1: einen vertikalen Schnitt durch eine erfindungsgemäße Verbindungsanordnung;
- Fig. 2: eine Draufsicht auf die erfindungsgemäße Verbinbindungsanordnung gemäß Fig. 1 und
- Fig. 3: ein Diagramm über den zur Montage und Demontage erforderlichen Kraftaufwand, der als Drehmoment über dem Drehwinkel aufgetragen ist.

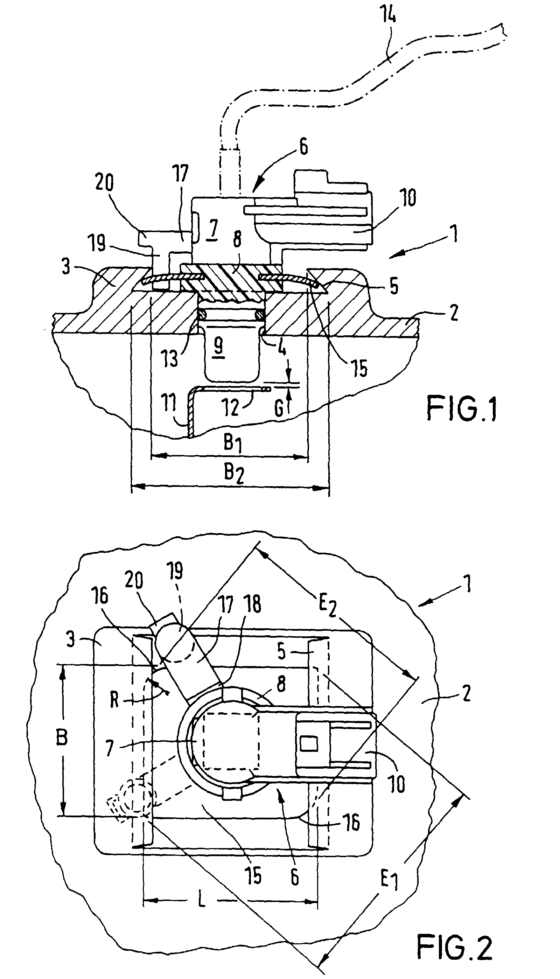

In den Figuren 1 und 2 ist ein gehäuseartiges Bauteil 1, z.B. ein Getriebegehäuse mit einer normalen Wandstärke 2 versehen, die in einem bestimmten Bereich z.B. in Form einer rechteckigen Erhebung 3 verdickt ist.

Das Gehäuse 1 ist in dem Bereich der Erhebung 3 mit einer zylindrischen Aufnahmebohrung 4 und einer oberhalb der Bohrung senkrecht zu dieser verlaufenden Schwalbenschwanzführung 5 versehen.

Das andere, gegenüber dem gehäuseartigen Bauteil 1 verdrehbare Bauteil 6 ist im vorliegenden Fall als ein Drehzahlsensor 6 ausgebildet, der einen Hauptkörper 7 in Form eines zylindrischen Zapfens 7 aus Kunststoff mit einem Anschlagflansch 8 aufweist, von dem aus sich axial ein Sensorkopf 9 und radial oder axial ein Anschlußstecker 10 erstrecken.

Der Sensorkopf 9 muß hierbei in unmittelbarer Nähe (Spalt G) eines Sensorrades 11 mit einer Vielzahl von signalgebenden Öffnungen 12 angeordnet werden und wird über einen O-Ring 13 gegenüber der Aufnahmebohrung 4 abgedichtet.

Anstelle des angeformten Anschlußsteckers 10 kann die für den Drehzahlsensor 6 erforderliche Anschlußleitung 14 (siehe Strich-Punkt-Linie) auch unmittelbar angeschlossen und angeformt werden.

Am Anschlagflansch 8 ist eine rechteckige Federplatte 15 befestigt oder mit eingeformt, die wie nachfolgend noch erläutert wird, mit der Schwalbenschwanzführung 5 zusammenwirkt.

Die Schwalbenschwanzführung 5 weist eine Eintrittsbreite B1 auf, die geringer ist als die Basisbreite B2 der Schwalbenschwanzführung 5.

Die rechteckige Federplatte 15 weist hierbei eine Breite B auf, die etwas geringer als die Eintrittsbreite B1 der Schwalbenschwanzführung ist und sie hat eine Länge L, die etwas geringer ist als die Basisbreite B2 der Schwalbenschwanzführung 5 und vorzugsweise der mittleren Breite der Schwalbenschwanzführung 5 entspricht.

Die rechteckige Federplatte 15 ist hierbei an zwei einander diametral gegenüberliegenden Ecken mit Abrundungen 16 versehen, deren Radius R kleiner als die halbe Breite B der Federplatte 15 ist. Die rechteckige Federplatte 15 ist im gezeigten Ausführungsbeispiel als eine drehfest eingeformte Federstahlplatte ausgebildet, sie kann jedoch auch als eine unmittelbar an den Hauptkörper 7 angeformte, einstückig mit diesem bestehende Kunststoff-Federplatte ausgebildet sein, wenn ein entsprechend geeignetes Kunststoffmaterial gewählt wird.

Am Hauptkörper bzw. zylindrischen Zapfen 7 ist im vorliegenden Ausführungsbeispiel ein Verriegelungsarm 17 über ein elastisches Gelenk 18 angeformt und weist einen Rastzapfen 19 und eine Handhabe 20 auf.

Der Drehzahlsensor 6 mit seinem Hauptkörper bzw. zylindrischen Zapfen 7 und der am Anschlagflansch 8 festgelegten rechteckigen Federplatte 15 kann bei einer gegenüber der in Fig. 2 gezeichneten Lage um 90 Grad nach links verdrehten Lage von oben zwischen die Längskanten der Schwalbenschwanzführung 5 eingeführt werden, derart, daß der Sensorkopf 9 in die Aufnahmebohrung 4 eingesetzt werden kann.

Der Verriegelungsarm 17 setzt hierbei von oben auf die Seite der Schwalbenschwanzführung 5 auf und durch darauffolgendes Verdrehen des Drehzahlsensors 6 in Richtung des Uhrzeigers um 90 Grad gelangt die rechteckige Federplatte 15 zunächst mit ihren Abrundungen 16 und dann mit ihren Kanten der Länge L in Eingriff mit der Schwalbenschwanzführung 5, wodurch die Kanten der Federplatte 15 nach unten verbogen werden und hierdurch den Drehzahlsensor 6 federnd und fest gegen das Gehäuse anpressen.

Nach erfolgter Drehung um 90 Grad schnappt der Verriegelungsarm 17 nach unten und der Verriegelungsbolzen 19 liegt auf Höhe der Basis der Schwalbenschwanzführung 5. Eine durch Vibrationen und dergleichen verursachte Rückdrehung des Drehmomentsensors 6 und damit ein unbeabsichtigtes Lösen der Verbindungsanordnung wird somit durch den Verriegelungsarm 17 unterbunden. Erst wenn durch manuellen Eingriff durch Erfassen der Handhabe 20 der Verriegelungsarm 17 nach oben abgehoben wird, kann durch eine Rückdrehung um 90 Grad die Verbindungsanordnung in erwünschter Weise gelöst werden.

Es wird ausdrücklich darauf hingewiesen, daß die erfindungsgemäße Verbindungsanordnung auch ohne den zusätzlichen Verriegelungsarm 17 in eingedrehter Lage gegen ein unbeabsichtigtes Lösen gesichert ist, und zwar infolge der Geometrie der Federplatte 15, was nachfolgend erläutert wird.

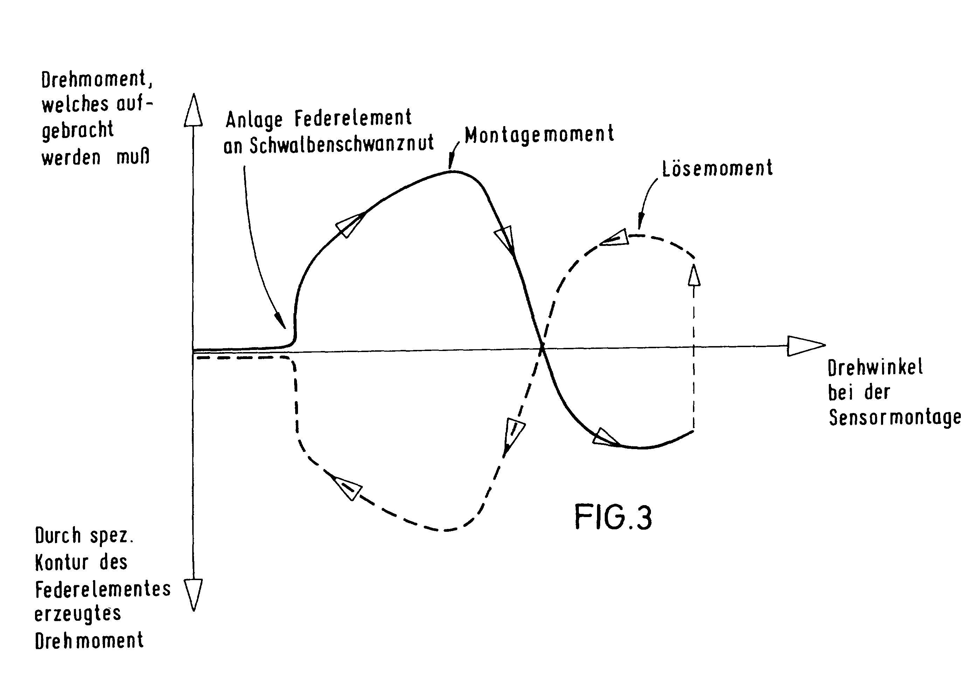

Die Federplatte 15 weist, wie aus Fig. 2 ersichtlich, eine größere Diagonale E₁ über den Ecken und eine kleinere Diagonale E₂ über den Abrundungen 16 auf. Der Radius R der Abrundungen 16 ist kleiner als die halbe Breite B und dementsprechend setzt die zur Montage um 90 Grad gedrehte Federplatte 15 zu Beginn einer Drehung im Uhrzeigersinn einen größeren Widerstand entgegen, der durch ein nach unten Abbiegen der Abrundungen 16 verursacht wird, wie aus Fig. 3 ersichtlich ist. Zum Abschluß der Drehung nimmt das erforderliche Drehmoment ab. Durch die größere Diagonale E₁ ist ein Überdrehen in eine Löserichtung nicht möglich.

Durch die Erfindung wird eine Verbindungsanordnung für zwei zueinander verdrehbare Bauteile geschaffen, die einfach und ohne Werkzeug montiert und demontiert werden kann und die eine zuverlässige Sicherung gegen ein unbeabsichtigtes Lösen durch Vibrationen und dergleichen bereitstellt.

## Patentansprüche

1. Verbindungsanordnung bestehend aus zwei zueinander verdrehbaren Bauteilen, von denen ein gehäuseartiges Bauteil (1) eine zylindrische Aufnahmebohrung (4) und benachbart dazu eine rechteckige Aufnahme (5) aufweist und das andere einsetzbare Bauteil (6) einen zylindrischen Zapfen (7) und benachbart dazu eine rechteckige Platte (15) aufweist und wobei ein Einsetzen bei um 90 Grad verdrehter Lage beider Bauteile und ein Verriegeln nach Verdrehung um 90 Grad erfolgt,
**dadurch gekennzeichnet**, daß
- die der zylindrischen Aufnahmebohrung (4) benachbarte, rechteckige Aufnahme eine parallel zur Außenfläche (2) verlaufende Schwalbenschwanzführung (5) ist und
- die dem zylindrischen Zapfen (7) benachbarte rechteckigen Platte eine an einem Anschlagflansch (8) angeordnete rechteckige Federplatte (15) ist, deren Breite (B) kleiner ist als die Eintrittsbreite (B1) und deren Länge (L) kleiner ist als die Basisbreite (B2) der Schwalbenschwanzführung (5) und die an zwei einander gegenüberliegenden Ecken mit Abrundungen (16) versehen ist, deren Radius (R) kleiner als die halbe Breite (B) ist.

2. Verbindungsanordnung nach Anspruch 1,
**dadurch gekennzeichnet**, daß
- am Hauptkörper bzw. zylindrischen Zapfen (7) ein Verriegelungsarm (17) über ein elastisches Gelenk (18) angeformt ist und einen Verriegelungsbolzen (19) und eine Handhabe (20) aufweist, der eine zusätzliche Sicherung gegen ein unbeabsichtigtes Lösen bereitstellt.

3. Verbindungsanordnung nach den Ansprüchen 1 und 2,
**dadurch gekennzeichnet**, daß
- das einsteckbare Bauteil ein Sensorbauteil (6) ist und am Hauptkörper bzw. zylindrischen Zapfen (7) einen sich radial oder axial erstreckenden Steckeranschluß (10) für eine erforderliche Verbindungsleitung und einen sich axial erstreckenden Sensorkopf (9) zum Zusammenwirken mit einem Sensorrad (11) aufweist.

4. Verbindungsanordnung nach den Ansprüchen 1 und 2,
**dadurch gekennzeichnet**, daß
- das einsteckbare Bauteil ein Sensorbauteil (6) ist, an dem die erforderliche Verbindungsleitung (14) unmittelbar angeschlossen und angeformt ist, so daß das Sensorbauteil einen Teil des sogenannten Kabelbaumes bildet.

5. Verbindungsanordnung nach den Ansprüchen 1 und 4,
**dadurch gekennzeichnet**, daß
- die rechteckige Federplatte (15) als eine am Hauptkörper (7) drehfest angeordnete Federstahlplatte ausgebildet ist.

6. Verbindungsanordnung nach den Ansprüchen 1 und 4,
**dadurch gekennzeichnet**, daß
- die rechteckige Federplatte (15) als eine mit dem Hauptkörper (7) einstückig angeformte Kunststoff-Federplatte ausgebildet ist.

## Claims

1. Connection arrangement consisting of two components which can be joined by means of rotation, of which a casing-type component (1) has a cylindrical location hole (4) and, adjacent to this, a square receptacle (5) and the other insertable component (6) has a cylindrical pin (7) and, adjacent to this, a square plate (15), and whereby insertion occurs with the position of both components rotated around 90 degrees and locking occurs following rotation around 90 degrees,
characterised in that
- the square receptacle adjacent to the cylindrical location hole (4) is a dovetailed guide (5) which runs parallel to the external surface (2) and
- the square plate adjacent to the cylindrical pin (7) is a square spring plate (15) positioned on a stop flange (8), its width (B) being smaller than the entrance width (B1) and its length (L) shorter than the basic width (B2) of the dovetailed guide (5), and which is provided at two opposite corners with rounded corners (16) whose radius (R) is smaller than half the width (B).

2. Connection arrangement according to claim 1,
characterised in that
- a locking arm (17) is moulded onto the main body or cylindrical pin (7) via an elastic joint (18) and has a locking pin (19) and a handle (20), providing additional security against unintended loosening.

3. Connection arrangement according to claims 1 and 2,
characterised in that
- the plug-in component is a sensor component (6) and has a connector (10), which extends radially or axially, for a required connecting line and an axially extending sensor head (9) for collaboration with a sensor wheel (11) .

4. Connection arrangement according to claims 1 and 2,
characterised in that
- the plug-in component is a sensor component (6) to which the required connecting line (14) is directly connected and is integrated so that the sensor component forms part of the so-called cable harness.

5. Connection arrangement according to claims 1 and 4,
characterised in that
- the square spring plate (15) is configured as a spring steel plate which is positioned in a rotation-resistant manner on the main body (7).

6. Connection arrangement according to claims 1 and 4,
characterised in that
- the square spring plate (15) is configured as a plastic spring plate which is integrally moulded with the main body (7).

## Revendications

1. Système d'assemblage constitué de deux pièces à rotation relative, parmi lesquelles une pièce (1) du genre carter présente un perçage récepteur cylindrique (4) et, au voisinage de ce perçage, un logement rectangulaire (5), et l'autre pièce (6), pouvant être insérée, présente un tenon cylindrique (7) et, au voisinage de ce tenon, une plaque rectangulaire (15), l'insertion s'effectuant dans une position tournée à 90 degrés des deux pièces, et le verrouillage après une rotation de 90 degrés,
**caractérisé** en ce que
- le logement rectangulaire voisin du perçage récepteur cylindrique (4) est un guide en queue d'aronde (5) s'étendant parallèlement à la face extérieure (2), et
- la plaque rectangulaire voisine du tenon cylindrique (7) est une plaque élastique rectangulaire (15) disposée sur une bride de butée (8), plaque dont la largeur (B) est inférieure à la largeur d'entrée (B1) et la longueur (L) à la largeur de base (B2) du guide en queue d'aronde (5), et qui est pourvue en deux coins opposés d'arrondis (16) dont le rayon (R) est inférieur à la moitié de la largeur (B).

2. Système d'assemblage selon la revendication 1, **caractérisé** en ce qu'un bras de verrouillage (17) est formé au moyen d'une articulation élastique (18) sur le corps principal ou encore le tenon cylindrique (7), et il présente un boulon de verrouillage (19) et une manette (20), qui fournit une protection supplémentaire contre un détachement inopiné.

3. Système d'assemblage selon les revendications 1 et 2, **caractérisé** en ce que la pièce insérable est une pièce de capteur (6) et présente, sur le corps principal ou encore le tenon cylindrique (7), un branchement de connecteur (10) s'étendant radialement ou axialement pour une ligne de connexion nécessaire, et une tête de capteur (9) s'étendant axialement et destinée à coopérer avec une roue de capteur (11).

4. Système d'assemblage selon les revendications 1 et 2, **caractérisé** en ce que la pièce insérable est une pièce de capteur (6) sur laquelle la ligne de connexion nécessaire (14) est directement raccordée et solidairement formée, de sorte que la pièce de capteur constitue une partie du faisceau de câbles.

5. Système d'assemblage selon les revendications 1 et 4, **caractérisé** en ce que la plaque élastique rectangulaire (15) est réalisée sous forme de plaque en acier à ressorts, disposée en solidarité de rotation sur le corps principal (7).

6. Système d'assemblage selon les revendications 1 et 4, **caractérisé** en ce que la plaque élastique rectangulaire (15) est réalisée sous forme de plaque élastique en matière plastique, formée d'un seul tenant avec le corps principal (7).
